# EUROPEAN PATENT SPECIFICATION

(11) **EP 0 303 326 B1**
(45) Date of publication and mention of the grant of the patent: **28.04.1993**
(21) Application number: 88201707.2
(22) Date of filing: 09.08.1988
(51) Int. Cl.: G01N 29/02, G01N 22/04

(54) **Apparatus for detecting unwanted liquid contamination in oil drums prior to their filling**
Verfahren zur Bestimmung einer unerwünschten Verunreinigung in Ölfässern vor ihrer Füllung
Appareil pour déterminer une contamination indésirable dans des barils d'huile avant leur remplissage

(30) Priority: 14.08.1987 GB 8719273
(43) Date of publication of application: 15.02.1989
(73) Proprietor: SHELL INTERNATIONALE RESEARCH MAATSCHAPPIJ B.V., 2596 HR Den Haag (NL)
(72) Inventor: Heard, Nigel Allister, Ince(nr Chester) (GB)

(56) References cited:
- DE-A- 2 724 959
- FR-B- 2 311 298
- US-A- 3 696 292
- PATENT ABSTRACTS OF JAPAN vol. 4, no. 66 (P-11)(548), 17th May 1980 & JP-A-55 035 228
- PATENT ABSTRACTS OF JAPAN vol. 10, no. 305 (P-507)(2361), 17 October 1986 & JP-A-61 120 035

## Description

The invention relates to a method for detecting unwanted water or other contaminating liquids in containers, such as oil drums, prior to their filling with products. In the oil industry, in particular at luboil installations, empty containers such as empty oil drums have to be inspected prior to their filling with products.

Usually, the containers of interest ranges from for example 205 litre drums to 1 litre cans, many of which may be second hand and reconditioned thereby requiring a careful inspection for cleanliness prior to filling with products which meet tight specifications.

It is important to know whether or not the container to be filled is not contaminated by water or other liquids, since for high grade oils any water or other contaminating liquid is unacceptable.

Usually, for 25 litre capacity and above, the inspection of the containers is done by an experienced inspector inserting a striplight through the filling hole of the container and observing its internal condition. The smaller containers have a smaller filling hole and the inspection is made without an inserted light.

However, water or other liquid contamination (particularly in reconditioned drums) can not be detected easily in this manner, since it has been found that for example in water contamination a 1 cm droplet would pass a general examination. It is an object of the invention to provide a method for detecting small amounts of liquid in containers prior to their filling, in a simple and sensitive manner.

The invention therefore provides a method for inspecting empty luboil drums for cleanliness prior to their filling with luboil products, using a combination of a microwave doppler unit and an acoustic source, for detecting unwanted water drops or other contaminating liquid drops remaining in the empty luboil drum, characterized by the steps of:
a) probing the inside of the luboil drum to be inspected by the said combination of a microwave doppler unit and acoustic source;
b) energizing the microwave unit with the acoustic source de-energized; and monitoring the output of the microwave unit showing a steady output;
c) subsequently energizing the acoustic source with a signal burst and monitoring the output of the microwave unit in order to detect a change in output, indicating from said change the presence of water drops or other contaminating liquid drops in the said luboil drum; and
d) rejecting an unacceptable luboil drum wherein the presence of water drops or other contaminating liquid drops has been detected.

It is remarked that the publication in Patent Abstracts of Japan, Volume 4, No. 66 (P-11) (548) discloses a method and an apparatus for inspecting a body contained in a tank. This inspection is based on a measurement of the Doppler-shift of laser-light which is caused by vibrations of the body due to the acoustic waves generated by an ultrasonic vibrator.

However, the problem of liquid contamination in oil drums in oil industry and its solution according to the invention have not been disclosed.

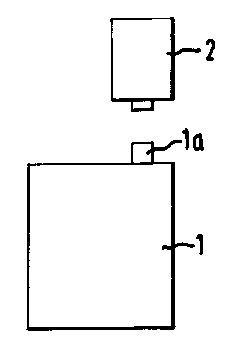

The invention will now be described by way of example in more detail with reference to the accompanying drawing, in which the figure represents schematically the principle of the invention.

Referring now to the figure an oil drum 1 is shown, provided with a filling hole 1a. The drum 1 can be inspected through the filling hole 1a by a transducer or sensor inspection system 2. This system will sense water or other liquid drops in the drum and comprises a microwave doppler unit and an acoustic source. The microwave doppler unit operates on the same principle as widely used motion detectors and intruder alarms. Microwave radiation is emitted from a transmitter antenna. Some fraction is returned to a co-sited receiver and is heterodyned in a detector with a signal originating from the same microwave oscillator. In the absence of motion the output of the detector is steady, but any motion causing a doppler shift of the returning radiation produces a fluctuating voltage indicative of the motion. The microwave doppler unit and the acoustic source can be mounted in the same transducer head or separately to probe the inside of the drum through the fillinghole. The output of the transducer system is connected in any way suitable for the purpose to a suitable signal processing system (not shown for reasons of clarity).

The operation of the apparatus is as follows:
With the acoustic source de-energized the microwave unit would show a steady output. On energizing the acoustic source with a signal burst two conditions could exist: (1) The clean container situation: the acoustic energy would bounce around the drum but not cause any significant movement of the container walls etc. and hence the microwave doppler unit still shows a steady output. (2) The liquid (e.g. water) in container situation: in this case the liquid will absorb some of the acoustic energy and start to move. This movement can be detected by the microwave doppler unit and shows itself as an AC output. The exact resolution of the system would depend on frequency, power, sensitivity etc. In tests carried out with the apparatus of the invention, a 10 GHz microwave module and a few hertz sonic source were applied and water drops of 2 cm and above could be sensed. It will be appreciated that the acoustic source can be sub-sonic, sonic or ultrasonic.

Various modifications of the present invention will become apparent to those skilled in the art from the foregoing description and accompanying drawing. Such modifications are intended to fall within the scope of the appended claims.

## Claims

1. A method of inspecting empty luboil drums for cleanliness prior to their filling with luboil products, using a combination of a microwave doppler unit and an acoustic source, for detecting unwanted water drops or other contaminating liquid drops remaining in the empty luboil drum, characterized by the steps of:
a) probing the inside of the luboil drum to be inspected by the said combination of a microwave doppler unit and acoustic source;
b) energizing the microwave unit with the acoustic source de-energized; and monitoring the output of the microwave unit showing a steady output;
c) subsequently energizing the acoustic source with a signal burst and monitoring the output of the microwave unit in order to detect a change in output, indicating from said change the presence of water drops or other contaminating liquid drops in the said luboil drum; and
d) rejecting an unacceptable luboil drum wherein the presence of water drops or other contaminating liquid drops has been detected.

2. The method as claimed in claim 1 characterized in that the acoustic source is sub-sonic.

3. The method as claimed in claim 1 characterized in that the acoustic source is sonic.

4. The method as claimed in claim 1 characterized in that the acoustic source is ultrasonic.

## Patentansprüche

1. Eine Methode zum Untersuchen von leeren Schmierölgebinden auf Sauberkeit, bevor sie mit Schmierölprodukten gefüllt werden, durch Anwendung der Kombination einer Mikrowellen-Dopplereinheit und einer akustischen Quelle, um unerwünschte Wassertropfen bzw. andere kontaminierende Flüssigkeiten im Innenraum der leeren Schmierölgebinde nachzuweisen, charakterisiert durch die folgenden Schritte:
a) abtasten des Innenraums des zu untersuchenden Schmierölgebindes mit besagter Kombination einer Mikrowellen-Dopplereinheit und einer akustischen Quelle;
b) aktivieren der Mikrowelleneinheit bei deaktivierter akustischer Quelle, und beobachten des gleichmäßigen Ausgangssignals der Mikrowelleneinheit;
c) nachfolgendes Aktivieren der akustischen Quelle mit einem Impulssignal, und beobachten des Ausgangssignals der Mikrowelleneinheit um Veränderungen dieses Ausgangssignals festzustellen, welche das Vorhandensein von Wassertropfen bzw. anderer kontaminierender Flüssigkeiten im besagten Schmierölgebinde anzeigen würden; und
d) verwerfen eines unannehmbaren Schmierölgebindes, in welchem das Vorhandensein von Wassertropfen bzw. anderer kontaminierender Flüssigkeiten nachgewiesen wurde.

2. Die Methode gemäß Anspruch Nr. 1, charakterisiert dadurch, daß die akustische Quelle im Unterschallbereich sendet.

3. Die Methode gemäß Anspruch Nr. 1, charakterisiert dadurch, daß die akustische Quelle im hörbaren Bereich sendet.

4. Die Methode gemaß Anspruch Nr. 1, charakterisiert dadurch, daß die akustische Quelle im Ultraschallbereich sendet.

## Revendications

1. Procédé pour examiner la propreté des fûts vides d'huile lubrifiante avant de les remplir par des produits lubrifiants, en utilisant une combinaison d'une unité Doppler à micro-ondes et une source acoustique, pour détecter des gouttes d'eau indésirables ou des gouttes d'un autre liquide contaminateur restant dans le fût vide d'huile lubrifiante, caractérisé par les étapes de:
a) sondage de l'intérieur du fût d'huile lubrifiante à examiner par la combinaison de l'unité Doppler à micro-ondes et de la source acoustique;
b) excitation de l'unité à micro-ondes avec la source acoustique désexcitée, et surveillance de la sortie de l'unité micro-ondes ayant une sortie continue;
c) ensuite, excitation de la source acoustique avec un signal de choc et surveillance de la sortie de l'unité à micro-ondes afin de détecter un changement dans la sortie, indiquant par ledit changement la présence de gouttes d'eau ou d'autres gouttes de liquide contaminateur dans ledit fût d'huile de lubrification; et
d) rejet d'un fût inacceptable d'huile de lubrification dans lequel il a été détecté la présence de gouttes d'eau ou de gouttes d'un autre liquide contaminateur.

2. Procédé selon la revendication 1 caractérisé en ce que la source acoustique est subsonique.

3. Procédé selon la revendication 1 caractérisé en ce que la source acoustique est sonique.

4. Procédé selon la revendication 1 caractérisé en ce que la source acoustique est ultrasonique.
